(19) Europäisches Patentamt / European Patent Office / Office européen des brevets

(11) EP 4 501 979 A1

(12) EUROPEAN PATENT APPLICATION
published in accordance with Art. 153(4) EPC

(43) Date of publication:
**05.02.2025 Bulletin 2025/06**

(21) Application number: **23775066.6**

(22) Date of filing: **24.03.2023**

(51) International Patent Classification (IPC):
***C08F 210/18** (2006.01)* ***C08F 4/6592** (2006.01)*
***C08L 23/08** (2025.01)* ***C08L 23/16** (2006.01)*

(52) Cooperative Patent Classification (CPC):
**C08F 4/6592; C08F 210/18; C08L 23/08; C08L 23/16**

(86) International application number:
**PCT/JP2023/011699**

(87) International publication number:
**WO 2023/182473 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022 JP 2022048312**

(71) Applicant: **Mitsui Chemicals, Inc.**
**Tokyo 104-0028 (JP)**

(72) Inventors:
- **ICHINO Kotaro**
  **Kuga-gun, Yamaguchi 740-0061 (JP)**
- **ARINO Mitsunao**
  **Ichihara-shi, Chiba 299-0108 (JP)**

(74) Representative: **Hoffmann Eitle**
**Patent- und Rechtsanwälte PartmbB**
**Arabellastraße 30**
**81925 München (DE)**

# (54) ETHYLENE/ALPHA-OLEFIN/5-VINYL-2-NORBORNENE COPOLYMER, COMPOSITION CONTAINING SAID COPOLYMER, AND CROSSLINKED BODY

(57) An object of the present invention is to obtain an ethylene/α-olefin/non-conjugated polyene copolymer that is applicable to LIM molding or a wide variety of other molding methods and is suitable for obtaining a molded body excellent in mechanical strength.
The present invention relates to an ethylene/α-olefin/5-vinyl-2-norbornene copolymer satisfying the following requirements (i) to (vi): (i) a weight average molecular weight is in a range of 1,000 to 50,000; (ii) a molecular weight distribution (Mw/Mn, Mw: weight average molecular weight, Mn: number average molecular weight) measured by gel permeation chromatography (GPC) is 2.7 or less; (iii) an intensity ratio Tαβ/Tαα in the $^{13}$C-NMR spectrum is 0.0 to 0.1; (iv) a content of a constitutional unit derived from 5-vinyl-2-norbornene is in a range of 0.1 to 20.0% by mass; (v) the constitutional unit derived from 5-vinyl-2-norbornene contains an endo form structure and an exo form structure, and a ratio of endo form structure/exo form structure is 2.5 or less; and (vi) an intrinsic viscosity [η] measured in decahydronaphthalene at 135°C is in a range of 0.01 to 0.8 dl/g.

EP 4 501 979 A1

## Description

### Technical Field

The present invention relates to an ethylene/α-olefin/5-vinyl-2-norbornene copolymer, a composition containing the copolymer, and a crosslinked body.

### Background Art

In recent years, liquid injection molding (LIM), that is, injection molding of liquid rubber has been widely used. Particularly recently, LIM has become a molding method that is attracting attention because of the advantages that short time automatic molding and composite molding (insert molding) with plastics are enabled. Examples of the characteristics of LIM molding include the followings: (1) steps such as material transfer, metering, mixing, and injection can be continuously automated, and required power can be reduced, (2) shortening of the molding cycle is achieved through rapid curing, (3) no reaction by-products are produced, (4) no impurities are mixed, (5) insert molding and composite molding are enabled due to the flowability of the material, low pressure molding, and a wide curing temperature range.

As the composition capable of LIM molding, for example, some compositions containing an ethylene/α-olefin/non-conjugated polyene copolymer have been proposed (Patent Literatures 1 to 3).

### Citation List

### Patent Literature

[Patent Literature 1] JP43433870B
[Patent Literature 2] JP3908001B
[Patent Literature 3] JP3901599B

### Summary of Invention

### Technical Problem

However, while the conventionally proposed ethylene/α-olefin/non-conjugated polyene copolymer is excellent in flowability and is applicable to LIM molding or a wide variety of other molding methods, its mechanical strength is unsatisfactory as compared with that of curing materials.

An object of the present invention is to obtain an ethylene/α-olefin/non-conjugated polyene copolymer that is applicable to LIM molding or a wide variety of other molding methods and is suitable for obtaining a molded body excellent in mechanical strength.

### Solution to Problem

The inventors of the present application have intensively studied, and as a result, found that an ethylene/α-olefin/non-conjugated polyene copolymer having a specific structure is applicable to LIM molding or a wide variety of other molding methods and is capable of obtaining a molded body excellent in mechanical strength, thereby completing the present invention.

Specifically, the present invention relates to the following [1] to [6].

[1] An ethylene/α-olefin/5-vinyl-2-norbornene copolymer satisfying the following requirements (i) to (vi):

(i) a weight average molecular weight is in a range of 1,000 to 50,000;
(ii) a molecular weight distribution (Mw/Mn, Mw: weight average molecular weight, Mn: number average molecular weight) measured by gel permeation chromatography (GPC) is 2.7 or less;
(iii) an intensity ratio Tαβ/Tαα in a $^{13}C$-NMR spectrum is 0.0 to 0.1;
(iv) a content of a constitutional unit derived from 5-vinyl-2-norbornene is in a range of 0.1 to 20.0% by mass;
(v) the constitutional unit derived from 5-vinyl-2-norbornene contains an endo form structure and an exo form structure, and a ratio of endo form structure/exo form structure is 2.5 or less; and
(vi) an intrinsic viscosity [η] measured in decahydronaphthalene at 135°C is in a range of 0.01 to 0.8 dl/g.

[2] The copolymer according to the item [1], wherein a B value represented by the following formula (i) is 1.10 or more,

$$B\ value = ([EX]+2[Y])/[2\times[E]\times([X]+[Y])] \quad ... \quad (i)$$

wherein [E], [X], and [Y] respectively represent mole fractions of ethylene, α-olefin, and 5-vinyl-2-norbornene, and [EX] represents a dyad chain fraction of ethylene-α-olefin.

[3] A copolymer composition comprising the ethylene/α-olefin/5-vinyl-2-norbornene copolymer according to the item [1] .

[4] A crosslinked body obtained by crosslinking the copolymer composition according to any one of the items [1] to [3].

[5] A method for producing an ethylene/α-olefin/5-vinyl-2-norbornene copolymer, comprising a step of copolymerizing ethylene, α-olefin, and 5-vinyl-2-norbornene in the presence of an olefin polymerization catalyst comprising:

(a) a bridged metallocene compound represented by the following general formula [I], and
(b) at least one compound (b) selected from the group consisting of an organometal compound (b-1), an organoaluminum oxy compound (b-2), and a compound (b-3) that reacts with the bridged metallocene compound (a) to form an ion pair,

wherein the copolymer satisfies the following requirements (i) to (vi):

(i) a weight average molecular weight is in a range of 1,000 to 50,000;
(ii) a molecular weight distribution (Mw/Mn, Mw: weight average molecular weight, Mn: number average molecular weight) measured by gel permeation chromatography (GPC) is 2.7 or less;
(iii) an intensity ratio Tαβ/Tαα in a $^{13}$C-NMR spectrum is 0.0 to 0.1;
(iv) a content of a constitutional unit derived from 5-vinyl-2-norbornene is in a range of 0.1 to 20.0% by mass;
(v) the constitutional unit derived from 5-vinyl-2-norbornene contains an endo form structure and an exo form structure, and
a ratio of endo form structure/exo form structure is 2.5 or less; and
(vi) an intrinsic viscosity [η] measured in decahydronaphthalene at 135°C is in a range of 0.01 to 0.8 dl/g,

[Chem. 1]

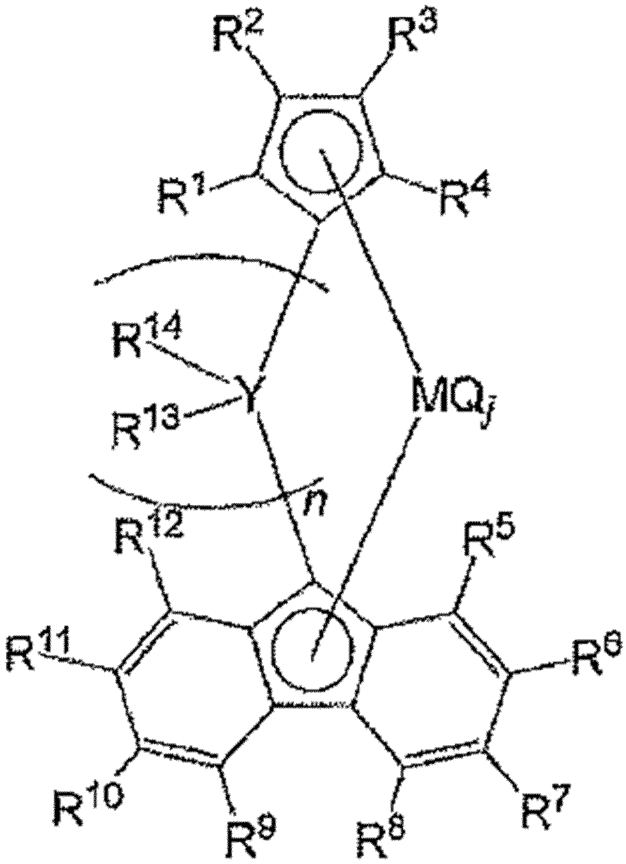

... [I]

wherein $R^1$, $R^2$, $R^3$, $R^4$, $R^5$, $R^6$, $R^7$, $R^8$, $R^9$, $R^{10}$, $R^{11}$, and $R^{12}$ are each an atom or a substituent selected from the group consisting of a hydrogen atom, a hydrocarbon group having 1 to 20 carbon atoms, a silicon-containing group, a nitrogen-containing group, an oxygen-containing group, a halogen atom, and a halogen-containing group, and $R^1$, $R^2$, $R^3$, $R^4$, $R^5$, $R^6$, $R^7$, $R^8$, $R^9$, $R^{10}$, $R^{11}$, and $R^{12}$ are the same as or different from each other,
either one of $R^{13}$ and $R^{14}$ is an aryl group or a substituted aryl group, and the other is an atom or a substituent selected from the group consisting of a hydrogen atom, a hydrocarbon group having 1 to 20 carbon atoms, a silicon-containing group, a nitrogen-containing group, an oxygen-containing group, a halogen atom, and a halogen-containing group,
adjacent substituents among $R^1$ to $R^{14}$ are optionally bonded to each other to form a ring,
Y is selected from atoms of Group 14, and M is a titanium atom, a zirconium atom, or a hafnium atom, and Q is selected as a combination of the same or different members from a halogen atom, a hydrocarbon group having 1 to 20 carbon atoms, an anion ligand, and a neutral ligand capable of coordinating to a lone electron pair, n is an integer of 1 to 4, and j is an integer of 1 to 4.

[6] The method for producing an ethylene/α-olefin/5-vinyl-2-norbornene copolymer according to claim 5, wherein the other of $R^{13}$ and $R^{14}$ is an alkyl group having 1 to 20 carbon atoms.

Advantageous Effects of Invention

Since the crosslinking efficiency of the constitutional unit derived from 5-vinyl-2-norbornene (VNB) is high in the ethylene/α-olefin/5-vinyl-2-norbornene copolymer of the present invention, the molded body to be obtained can achieve high strength even when the amount of VNB copolymerized is low, and has a good balance between crosslinkability and the processability without crosslinking.

Description of Embodiments

<Ethylene/α-olefin/5-vinyl-2-norbornene copolymer>

The ethylene/α-olefin/5-vinyl-2-norbornene copolymer of the present invention [hereinafter, sometimes referred to as "the copolymer"] is a copolymer satisfying the following requirements (i) to (vi).

<Requirement (i)>

The weight average molecular weight is in the range of 1,000 to 50,000, preferably 1,500 to 35,000, more preferably 2,000 to 30,000, and most preferably 2,300 to 10,000.

When the molecular weight of the copolymer of the present invention falls within such a range, the copolymer has good flowability and is moldable with low pressure, and the mechanical strength of the molded body to be obtained is high.

<Requirement (ii)>

The molecular weight distribution measured by gel permeation chromatography (GPC) (Mw/Mn, Mw: weight average molecular weight, Mn: number average molecular weight) is 2.7 or less, and preferably 2.6 or less.

When the copolymer of the present invention has such a molecular weight distribution, the mechanical strength of the molded body to be obtained is high.

Using gel permeation chromatograph: HLC-8321 GPC/HT model (manufactured by Tosoh Corporation), Mw, Mn, and Mw/Mn (molecular weight distribution) are determined. The main measurement conditions are as follows.

Detector: Differential refractometer

Column: TSKgel GMH6-HT × 2 + TSKgel GMH6-HTL × 1

(each having internal diameter 7.8 mmφ × length 300 mm per column)
Temperature: 140°C
Mobile phase: o-dichlorobenzene (containing 0.025% BHT)
Injection volume: 400 μL
Sample concentration: ca 0.15% (w/v)
Sample filtration: filtered by a sintered filter with a pore diameter of 1.0 um
Column calibration: monodisperse polystyrene (manufactured by Tosoh Corporation)
Molecular weight conversion: in terms of EPR/calibrating method taking viscosity into account
16 monodisperse standard polystyrenes (molecular weight 20,600,000 to 580) manufactured by Tosoh Corporation are measured to prepare a cubic polynomial universal calibration curve.
Parameter K in terms of EPR: 0.000403, α: 0.700

<Requirement (iii)>

The intensity ratio Tαβ/Tαα in the $^{13}$C-NMR spectrum is 0.0 to 0.1, preferably 0 to 0.05, and further preferably 0 to 0.01. Herein, as shown below, Tαβ represents the peak intensity of a carbon atom having a branch at the α position and the β position in the $^{13}$C-NMR spectrum, and Tαα represents the peak intensity of a carbon atom having a branch at both α positions.

[Chem. 2]

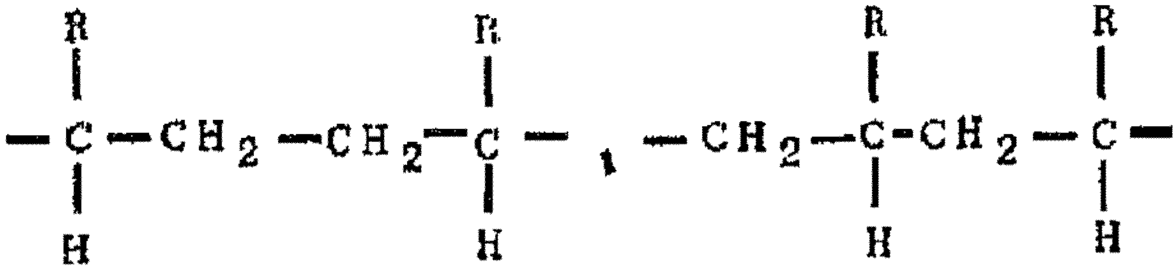

(Tαβ) (Tαα)

When the intensity ratio Tαβ/Tαα falls within the range, the molded body obtained from the ethylene/α-olefin/5-vinyl-2-norbornene copolymer is excellent in strength.

<Requirement (iv)>

The content of the constitutional unit derived from 5-vinyl-2-norbornene (hereinafter, sometimes referred to as "VNB") falls within the range of 0.1 to 20.0% by mass, preferably 0.5 to 15.0% by mass, and more preferably 1.0 to 10.0% by mass.

When the content of the constitutional unit derived from VNB falls within the above range, the shortening of a molding cycle is achieved by rapid curing, and the mechanical strength of the molded body to be obtained is high.

<Requirement (v)>

The constitutional unit derived from VNB contains an endo form structure and an exo form structure, and the ratio of endo form structure/exo form structure is 2.5 or less, preferably 2.4 or less, and further preferably 2.3 or less.

When the ratio of endo form structure/exo form structure falls within the range, the mechanical strength of the molded body obtained from the ethylene/α-olefin/VNB copolymer is high.

The endo form represents the peak intensity (9n) of a carbon atom in the vicinity of 114 ppm in the $^{13}$C-NMR spectrum, and the exo form represents the peak intensity (9x) of a carbon atom in the vicinity of 111.5 ppm in the $^{13}$C-NMR spectrum.

[Chem. 3]

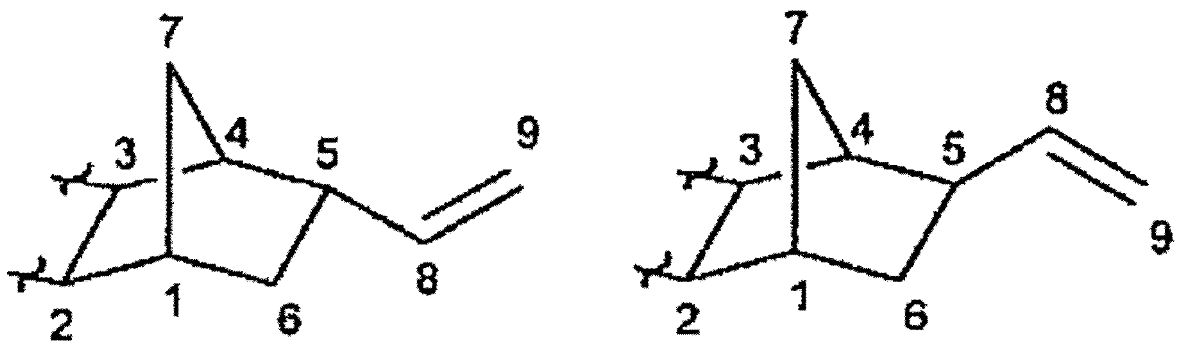

endo(n) exo(x)

<Measurement of intensity ratio Tαβ/Tαα and endo form structure/exo form structure ratio>

The intensity ratio Tαβ/Tαα and the endo form structure/exo form structure ratio can be determined as follows.

The $^{13}$C-NMR spectrum of the copolymer is measured by using, for example, a 400 MHz NMR measurement apparatus manufactured by JEOL Ltd. The measurement is carried out by using a mixed solution of hexachlorobutadiene/d6-benzene = 2/1 (volume ratio) that is prepared so that the sample concentration is 5% by weight, under the conditions of 67.8 MHz, 25°C, and d6-benzene (128 ppm). The measured $^{13}$C-NMR spectrum is analyzed according to the proposals of Lindemann Adams (Analysis Chemistry 43, p 1245(1971)), J.C.Randall (Review Macromolecular Chemistry Physics, C29, 201(1989)).

<Requirement (vi)>

The intrinsic viscosity [η] measured in decahydronaphthalene at 135°C is in the range of 0.01 to 0.8 dl/g, preferably 0.03 to 0.6 dl/g, more preferably 0.05 to 0.5 dl/g, and most preferably 0.05 to 0.4 dl/g.
When the intrinsic viscosity [η] falls within the above range, the copolymer has good flowability and is moldable with low pressure, and the mechanical strength of the molded body to be obtained is high.
The ethylene/α-olefin/VNB copolymer of the present invention preferably satisfies the following requirement (v) in addition to the above requirements (i) to (vi).

<Requirement (v)>

The B value represented by the following formula (i) is in the range of 1.10 or more, more preferably 1.10 to 1.40, and most preferably 1.14 to 1.37.

$$\text{B value} = ([EX]+2[Y])/[2\times[E]\times([X]+[Y])] \quad \ldots \text{(i)}$$

wherein [E], [X], and [Y] respectively represent mole fractions of ethylene (a1), α-olefin having 3 to 20 carbon atoms (a2), and VNB (c), and [EX] represents a dyad chain fraction of ethylene (a1)-α-olefin having 3 to 20 carbon atoms (a2).
The ethylene/α-olefin/VNB copolymer in which the B value satisfies the above range is excellent in low-temperature characteristics.
Regarding the measurement of the above B value, a $^{13}$C-NMR spectrum (100 MHz, ECX400P manufactured by JEOL Ltd.) is measured by using o-dichlorobenzene-$d_4$/benzene-$d_6$ (4/1 [v/v]) as a measuring solvent at a measurement temperature of 120°C, and the B value is calculated based on the above formula (i).
In the ethylene/α-olefin/VNB copolymer of the present invention, a molar ratio [(a1)/(a2)] of the structural unit derived from the ethylene (a1) to the structural unit derived from the α-olefin having 3 to 20 carbon atoms (a2) is usually 40/60 to 99.9/0.1, preferably 50/50 to 90/10, more preferably 55/45 to 85/15, and further preferably 55/45 to 78/22.
By using a copolymer satisfying such requirements, a molded body excellent in rubber elasticity, mechanical strength, and flexibility can be obtained.
The amount of ethylene (the content of the constitutional unit derived from the ethylene (a1)) and the amount of α-olefin (the content of the constitutional unit derived from the α-olefin (a2)) in the copolymer can be determined by $^{13}$C-NMR.

<α-olefin (a2)>

Examples of the above α-olefin (a2) having 3 to 20 carbon atoms include propylene, 1-butene, 1-pentene, 1-hexene, 4-methyl-1-pentene, 1-heptene, 1-octene, 1-decene, 1-dodecene, 1-tetradecene, 1-hexadecene, and 1-eicosene. Among these, α-olefins having 3 to 8 carbon atoms such as 1-butene, 1-hexene, and 1-octene are preferable, and propylene and 1-butene are particularly preferable. Such α-olefins are preferable because they have relatively low raw material costs, the copolymer to be obtained exhibits an excellent mechanical nature, and furthermore, a molded body having rubber elasticity can be obtained.
The above α-olefin (a2) may be used singly or in combination of two or more kinds thereof.
Each of the ethylene (a1), the α-olefin (a2), and 5-vinyl-2-norbornene may be derived from biomass.

<Method for producing ethylene/α-olefin/VNB copolymer>

The ethylene/α-olefin/5-vinyl-2-norbornene copolymer (hereinafter, sometimes referred to as "the copolymer") can be produced by the following production method.
The ethylene/α-olefin/5-vinyl-2-norbornene copolymer can be produced by the production method including a step of copolymerizing ethylene, α-olefin, and 5-vinyl-2-norbornene in the presence of an olefin polymerization catalyst containing:

(a) a bridged metallocene compound represented by the following general formula [I], and
(b) at least one compound (b) selected from the group consisting of an organometal compound (b-1), an organoaluminum oxy compound (b-2), and a compound (b-3) that reacts with the bridged metallocene compound (a) to form an

ion pair.

With such a production method, there can be provided the ethylene/α-olefin/5-vinyl-2-norbornene copolymer satisfying the following requirements (i) to (vi):

(i) a weight average molecular weight is in a range of 1,000 to 50,000;
(ii) a molecular weight distribution (Mw/Mn, Mw: weight average molecular weight, Mn: number average molecular weight) measured by gel permeation chromatography (GPC) is 2.7 or less;
(iii) an intensity ratio Tαβ/Tαα in a $^{13}$C-NMR spectrum is 0.0 to 0.1;
(iv) a content of a constitutional unit derived from 5-vinyl-2-norbornene is in a range of 0.1 to 20.0% by mass;
(v) the constitutional unit derived from 5-vinyl-2-norbornene contains an endo form structure and an exo form structure, and
a ratio of endo form structure/exo form structure is 2.5 or less; and
(vi) an intrinsic viscosity [η] measured in decahydronaphthalene at 135°C is in a range of 0.01 to 0.8 dl/g,

[Chem. 4]

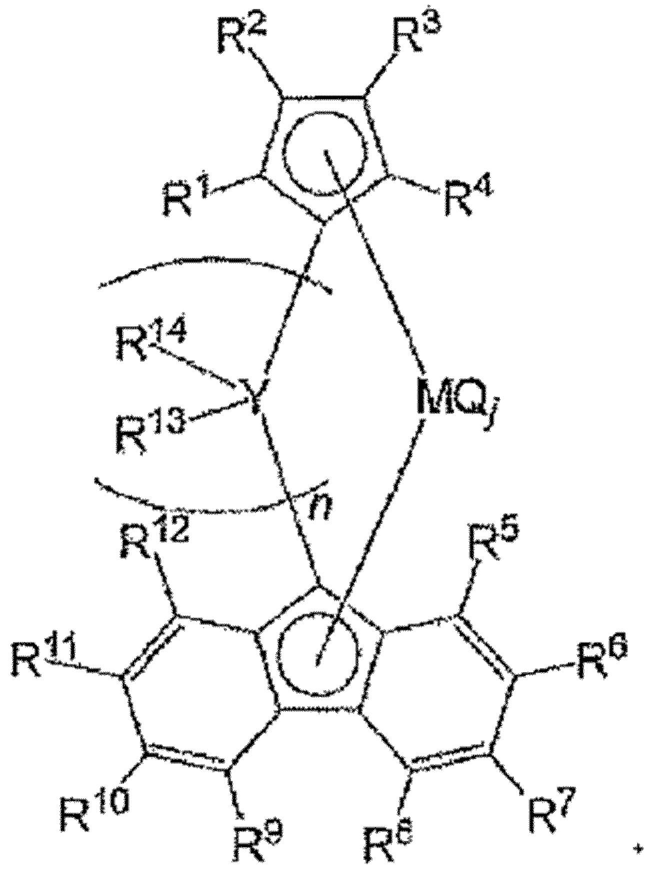

... [I]

wherein $R^1$, $R^2$, $R^3$, $R^4$, $R^5$, $R^6$, $R^7$, $R^8$, $R^9$, $R^{10}$, $R^{11}$, and $R^{12}$ are each an atom or a substituent selected from the group consisting of a hydrogen atom, a hydrocarbon group having 1 to 20 carbon atoms, a silicon-containing group, a nitrogen-containing group, an oxygen-containing group, a halogen atom, and a halogen-containing group, and $R^1$, $R^2$, $R^3$, $R^4$, $R^5$, $R^6$, $R^7$, $R^8$, $R^9$, $R^{10}$, $R^{11}$, and $R^{12}$ are the same as or different from each other, either one of $R^{13}$ and $R^{14}$ is an aryl group or a substituted aryl group, and the other is an atom or a substituent selected from the group consisting of a hydrogen atom, a hydrocarbon group having 1 to 20 carbon atoms, a silicon-containing group, a nitrogen-containing group, an oxygen-containing group, a halogen atom, and a halogen-containing group,
adjacent substituents among $R^1$ to $R^{14}$ are optionally bonded to each other to form a ring,
Y is selected from atoms of Group 14, and M is a titanium atom, a zirconium atom, or a hafnium atom, and
Q is selected as a combination of the same or different members from a halogen atom, a hydrocarbon group having 1 to 20 carbon atoms, an anion ligand, and a neutral ligand capable of coordinating to a lone electron pair, n

is an integer of 1 to 4, and j is an integer of 1 to 4.

In the bridged metallocene compound (a) represented by the general formula [I], either one of $R^{13}$ and $R^{14}$ is preferably an aryl group or a substituted aryl group, and the other is a hydrocarbon group having 1 to 20 carbon atoms. Herein, one and the other mean that, in the relationship between $R^{13}$ and $R^{14}$, when one is $R^{13}$, the other is $R^{14}$, or when one is $R^{14}$, the other is $R^{13}$.

«Compound (b)»

The compound (b) is at least one compound selected from (b-1) the organometallic compound, (b-2) the organoaluminum oxy compound, and (b-3) the ionized ionic compound, and preferably contains at least the organometallic compound (b-1) .

(b-1) Organometallic compound

As the organometallic compound (b-1), an organometallic compound in Group 1, 2, 12, and 13 of the periodic table, such as the following general formulas [VII] to [IX], is used.

An organoaluminum compound represented by the general formula [VII]:

(b-1a) General Formula:

$R^a_m Al(OR^b)_n H_p X_q$ --- [VII]

wherein $R^a$ and $R^b$, each of which may be the same or different, represent a hydrocarbon group having 1 to 15, preferably 1 to 4 carbon atoms; X represents a halogen atom; m, n, p, and q are numbers defined as $0 < m \leq 3$, $0 \leq n < 3$, $0 \leq p < 3$, $0 \leq q < 3$, and $m + n + p + q = 3$.

Examples of such compounds include trialkylaluminum such as trimethylaluminum, triethylaluminum, triisobutylaluminum, and tri-n-octylaluminum; tricycloalkylaluminum, isobutylaluminumdichloride, diethylaluminumchloride, ethylaluminumdichloride, ethylaluminumsesquichloride, methylaluminumdichloride, dimethylaluminumchloride, diisobutylaluminumhydride.

A complex alkylated compound of a metal of Group 1 of the periodic table and aluminum, represented by the general formula [VIII]:

(b-1b) General Formula:

$M^2 AlR^a_4$ --- [VIII]

wherein $M^2$ represents Li, Na, or K, and $R^a$ is a hydrocarbon group having 1 to 15, preferably 1 to 4 carbon atoms.

Examples of such compounds include $LiAl(C_2H_5)_4$ and $LiAl(C_7H_{15})_4$.

A dialkyl compound having a metal of Group 2 or 12 of the periodic table, represented by the general formula [IX]

(b-1c) General Formula:

$R^a R^b M^3$ --- [IX]

wherein $R^a$ and $R^b$, each of which may be the same or different, represent a hydrocarbon group having 1 to 15, preferably 1 to 4 carbon atoms, and $M^3$ is Mg, Zn, or Cd.

Among the organometallic compounds (b-1), organoaluminum compounds such as triethylaluminum, triisobutylaluminum and tri-n-octylaluminum are preferable. Such organometallic compounds (b-1) may be used singly or in combination of two or more kinds thereof.

(b-2) Organoaluminum oxy compound

The organoaluminum oxy compound (b-2) may be a conventionally known aluminoxane and may be a benzene-insoluble organoaluminum oxy compound such as those exemplified in JP02-78687A.

The conventionally known aluminoxane can be produced by, for example, the following methods, and is usually obtained as a solution of a hydrocarbon solvent. (1) A method in which an organoaluminum compound such as trialkylaluminum is added to a hydrocarbon medium suspension liquid of a compound containing adsorbed water or a salt containing crystal water, such as magnesium chloride hydrate, copper sulfate hydrate, aluminum sulfate hydrate, nickel sulfate hydrate, or cerium(III) chloride hydrate, and the adsorbed water or the crystal water is reacted with the organoaluminum compound. (2) A method in which water, ice, or water vapor is directly made to act with an organoaluminum compound such as trialkylaluminum in a medium such as benzene, toluene, ethyl ether, or tetrahydrofuran. (3) A

method in which an organic tin oxide such as dimethyltin oxide or dibutyltin oxide is reacted with an organoaluminum compound such as trialkylaluminum in a medium such as decane, benzene, or toluene.

The aluminoxane may contain a small amount of organometallic components. The aluminoxane solution recovered may have a solvent or unreacted organoaluminum compound distilled off therefrom, followed by being redissolved in a solvent or suspended in a poor solvent of aluminoxane.

Examples of the organoaluminum compound used in preparing aluminoxane include an organoaluminum compound similar to those exemplified as an organoaluminum compound belonging to the (b-1a).

Among these, trialkylaluminum and tricycloalkylaluminum are preferable, and above all, trimethylaluminum and triisobutylaluminum are particularly preferable.

An organoaluminum compound such as the above-mentioned is used singly or in combination of two or more kinds.

A benzene-insoluble organoaluminum oxy compound which is an aspect of the organoaluminum oxy compound (b-2) used in the present invention is preferably one which has an Al component dissolved in benzene at 60°C at usually 10% by weight or less, preferably 5% by weight or less, particularly preferably 2% by weight or less with respect to 100% by weight of benzene based on the conversion to Al atoms, i.e., one which is insoluble or poorly-soluble to benzene.

Examples of the organoaluminum oxy compound (b-2) used in the present invention include an organoaluminum oxy compound containing boron represented by the following general formula [X].

[Chem. 5]

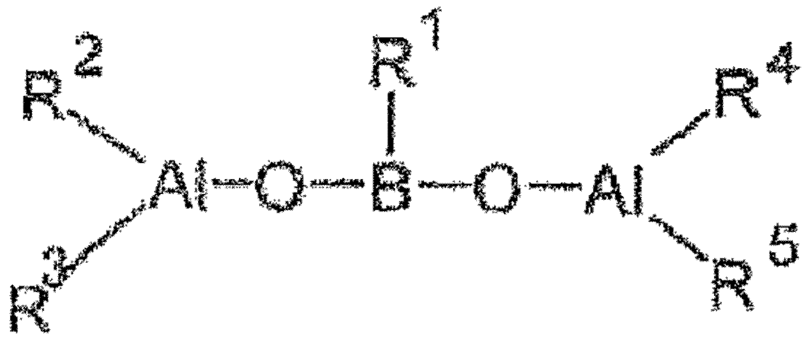

· · · [X]

wherein $R^1$ represents a hydrocarbon group having 1 to 10 carbon atoms, and $R^2$ to $R^5$, each of which may be the same or different, and represent a hydrogen atom, a halogen atom, and a hydrocarbon group having 1 to 10 carbon atoms.

An organoaluminum oxy compound containing a boron represented by the general formula [X] can be produced by reacting an alkyl boronic acid represented by the following general formula [XI]:
General Formula:

$R^1$-B(OH)$_2$ --- [XI]

wherein $R^1$ represents the same group as $R^1$ in the general formula [X], with an organoaluminum compound in an inert solvent in an inert gas atmosphere at a temperature of -80°C to room temperature for 1 minute to 24 hours.

Examples of the alkyl boronic acid represented by the general formula [XI] include methyl boronic acid, ethyl boronic acid, isopropyl boronic acid, n-propyl boronic acid, n-butyl boronic acid, isobutyl boronic acid, n-hexyl boronic acid, cyclohexyl boronic acid, phenyl boronic acid, 3,5-difluorophenyl boronic acid, pentafluorophenyl boronic acid, and 3,5-bis(trifluoromethyl)phenyl boronic acid.

Among these, methyl boronic acid, n-butyl boronic acid, isobutyl boronic acid, 3,5-difluorophenyl boronic acid, and pentafluorophenyl boronic acid are preferable. These are used singly or in combination of two or more kinds.

Examples of the organoaluminum compound to be reacted with such alkyl boronic acids include an organoaluminum compound similar to those exemplified as an organoaluminum compound belonging to the (b-1a). Among these, trialkylaluminum and tricycloalkylaluminum are preferable, and trimethylaluminum, triethylaluminum, and triisobutylaluminum are particularly preferable.

An organoaluminum oxy compound (b-2) such as the above-mentioned is used singly or in combination of two or more kinds.

(b-3) Ionized ionic compound

Examples of the ionized ionic compound (b-3) include Lewis acids, ionic compounds, borane compounds, and carborane compounds described in, for example, JP1-501950W, JP1-502036W, JP3-179005A, JP3-179006A, JP3-207703A, JP3-207704A, and USP5321106. Further examples also include heteropoly compounds and isopoly compounds. Such an ionized ionic compound (b-3) is used singly or in combination of two or more kinds.

Specific examples of the Lewis acids include a compound represented by $BR_3$ (wherein R is a phenyl group which may have a substituent such as fluorine, methyl group, and trifluoromethyl group, or fluorine), for example, trifluoroboron, triphenylboron, tris(4-fluorophenyl)boron, tris(3,5-difluorophenyl)boron, tris(4-fluorometyhylphenyl)boron, tris(pentafluorophenyl)boron, tris(p-tolyl)boron, tris(o-tolyl)boron, and tris(3,5-dimethylphenyl)boron.

Examples of the ionic compounds include a compound represented by the following general formula [XII].

[Chem. 6]

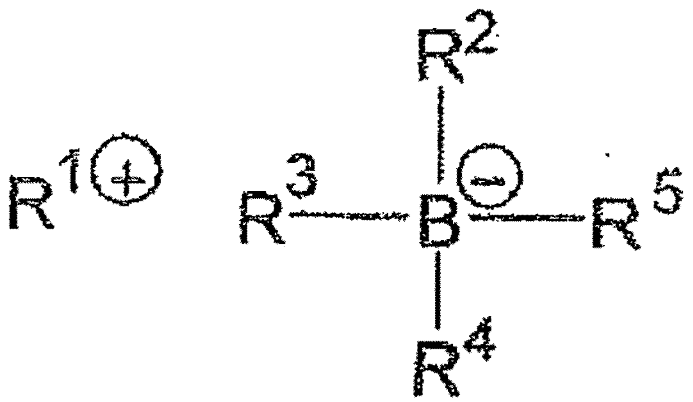

• • • [XII]

wherein $R^{1+}$ is, for example, $H^+$, a carbonium cation, an oxonium cation, an ammonium cation, a phosphonium cation, a cycloheptyltrienyl cation, or a ferrocenium cation having a transition metal; and $R^2$ to $R^5$, each of which may be the same or different, are organic groups, preferably aryl groups or substituted aryl groups.

Specific examples of the carbonium cation include a trisubstituted carbonium cation such as a triphenyl carbonium cation, a tri(methylphenyl)carbonium cation, and a tri(dimethylphenyl)carbonium cation.

Specific examples of the ammonium cation include a trialkylammonium cation such as a trimethylammonium cation, a triethylammonium cation, a tripropylammonium cation, a tributylammonium cation, and a tri(n-butyl)ammonium cation;

an N,N-dialkylanilinium cation such as an N,N-dimethylanilinium cation, an N,N-diethylanilinium cation, and an N,N,2,4,6-pentamethylanilinium cation; and

a dialkylammonium cation such as a di(isopropyl)ammonium cation, and a dicyclohexylammonium cation.

Specific examples of the phosphonium cation include a triarylphosphonium cation such as a triphenylphosphonium cation, a tri(methylphenyl)phosphonium cation, and a tri(dimethylphenyl)phosphonium cation.

As $R^{1+}$, for example, a carbonium cation and an ammonium cation are preferable, and in particular, a triphenyl carbonium cation, an N,N-dimethylanilinium cation, and an N,N-diethylanilinium cation are preferable.

Examples of the ionic compounds include trialkyl substituted ammonium salts, N,N-dialkylanilinium salts, dialkylammonium salts, and triarylphosphonium salts.

Specific examples of the trialkyl substituted ammonium salts include triethylammoniumtetra(phenyl)boron, tripropylammoniumtetra(phenyl)boron, tri(n-butyl)ammoniumtetra(phenyl)boron, trimethylammoniumtetra(p-tolyl)boron, trimethylammoniumtetra(o-tolyl)boron, tri(n-butyl)ammoniumtetra(pentafluorophenyl)boron, tripropylammoniumtetra(o,p-dimethylphenyl)boron, tri(n-butyl)ammoniumtetra(N,N-dimethylphenyl)boron, tri(n-butyl)ammoniumtetra(p-trifluoromethylphenyl)boron, tri(n-butyl)ammoniumtetra(3,5-ditrifluoromethylphenyl)boron, and tri(n-butyl)ammoniumtetra(o-tolyl)boron.

Specific examples of the N,N-dialkylanilinium salts include N,N-dimethylaniliniumtetra(phenyl)boron, N,N-diethylaniliniumtetra(phenyl)boron, and N,N,2,4,6-pentamethylaniliniumtetra(phenyl)boron.

Specific examples of the dialkylammonium salts include di(1-propyl)ammoniumtetra(pentafluorophenyl)boron

and dicyclohexylammoniumtetra(phenyl)boron.

Further, examples of the ionic compounds include triphenylcarbeniumtetrakis(pentafluorophenyl)borate, N,N-dimethylaniliniumtetrakis(pentafluorophenyl)borate, ferroceniumtetra(pentafluorophenyl)borate, a triphenylcarbeniumpentaphenylcyclopentadienyl complex, an N,N-diethylaniliniumpentaphenylcyclopentadienyl complex, and boron compounds represented by the following formula [XIII] or [XIV]. In the following formula, Et represents an ethyl group.

[Chem. 7]

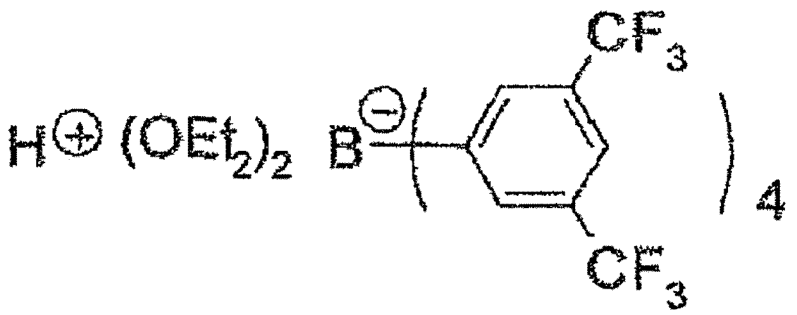

... [XIII]

[Chem. 8]

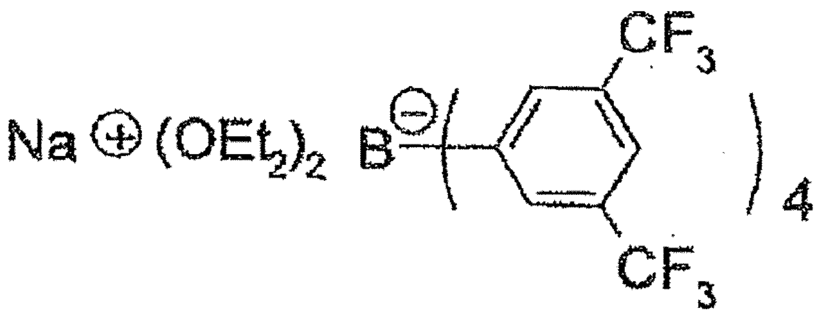

... [XIV]

Specific examples of the borane compound include decaborane; anion salts such as bis[tri(n-butyl)ammonium]nonaborate, bis[tri(n-butyl)ammonium]decaborate, bis[tri(n-butyl)ammonium]undecaborate, bis[tri(n-butyl)ammonium]dodecaborate, bis[tri(n-butyl)ammonium]decachlorodecaborate, and bis[tri(n-butyl)ammonium]dodecachlorododecaborate; and metal borane anion salts such as tri(n-butyl)ammoniumbis(dodecahydridododecaborate)cobaltate (III) and bis[tri(n-butyl)ammonium]bis(dodecahydridododecaborate)nickelate (III).

Specific examples of the carborane compounds include a salt of an anion such as 4-carbanonaborane, 1,3-dicarbanonaborane, 6,9-dicarbadecaborane, dodecahydrido-1-phenyl-1,3-dicarbanonaborane, dodecahydrido-1-methyl-1,3-dicarbanonaborane, undecahydrido-1,3-dimethyl-1,3-dicarbanonaborane, 7,8-dicarbaundecaborane, 2,7-dicarbaundecaborane, undecahydrido-7,8-dimethyl-7,8-dicarbaundecaborane, dodecahydrido-11-methyl-2,7-dicarbaundecaborane, tri(n-butyl)ammonium1-carbadecaborate, tri(n-butyl)ammonium-1-carbaundecaborate, tri(n-butyl)ammonium-1-carbadodecaborate, tri(n-butyl)ammonium-1-trimethylsilyl-1-carbadecaborate, tri(n-butyl)ammoniumbromo-1-carbadodecaborate, tri(n-butyl)ammonium-6-carbadecaborate, tri(n-butyl)ammonium-7-carbaundecaborate, tri(n-butyl)ammonium-7,8-dicarbaundecaborate, tri(n-butyl)ammonium-2,9-dicarbaundecaborate, tri(n-butyl)ammoniumdodecahydrido-8-methyl-7,9-dicarbaundecaborate, tri(n-butyl)ammoniumundecahydrido-8-ethyl-7,9-dicarbaundecaborate, tri(n-butyl)ammoniumundecahydrido-8-butyl-7,9-dicarbaundecaborate, tri(n-butyl)ammoniumundecahydrido-8-allyl-7,9-dicarbaundecaborate, tri(n-butyl)ammoniumundecahydrido-9-trimethylsilyl-7,8-dicarbaundecaborate, and tri(n-butyl)ammoniumundecahydrido-4,6-dibromo-7-carbaundecaborate; and

a salt of a metal carborane anion such as tri(n-butyl)ammoniumbis(nonahydrido-1,3-dicarbanonaborate)cobaltate (III), tri(n-butyl)ammoniumbis(undecahydrido-7,8-dicarbaundecaborate)ferrate (III), tri(n-butyl)ammoniumbis(undecahydrido-7,8-dicarbaundecaborate)cobaltate (III), tri(n-butyl)ammoniumbis(undecahydrido-7,8-dicarbaundecaborate)nickelate (III), tri(n-butyl)ammoniumbis(undecahydrido-7,8-dicarbaundecaborate)cuprate (III), tri(n-butyl)ammoniumbis(undecahydrido-7,8-dicarbaundecaborate)aurate (III), tri(n-butyl)ammoniumbis(nonahydrido-7,8-dimethyl-7,8-dicarbaundecaborate)ferrate (III), tri(n-butyl)ammoniumbis(nonahydrido-7,8-dimethyl-7,8-dicarbaundecaborate)chromate (III),

tri(n-butyl)ammoniumbis(tribromooctahydrido-7,8-dicarbaundecaborate)cobaltate (III), tris[tri(n-butyl)ammonium]bis(undecahydrido-7-carbaundecaborate)chromate (III), bis[tri(n-butyl)ammonium]bis(undecahydrido-7-carbaundecaborate)manganate (iv), bis[tri(n-butyl)ammonium]bis(undecahydrido-7-carbaundecaborate)cobaltate (III), and bis[tri(n-butyl)ammonium]bis(undecahydrido-7-carbaundecaborate)nickelate (iv).

A heteropoly compound comprises an atom selected from silicon, phosphorus, titanium, germanium, arsenic, and tin, and an atom or two or more atoms selected from vanadium, niobium, molybdenum, and tungsten. Specifically, phosphorusvanadic acid, germanovanadic acid, arsenicvanadic acid, phosphorusniobic acid, germanoniobic acid, siliconomolybdic acid, phosphorusmolybdic acid, titaniummolybdic acid, germanomolybdic acid, arsenicmolybdic acid, tinmolybdic acid, phosphorustungstic acid, germanotungstic acid, tintungstic acid, phosphorusmolybdovanadic acid, phosphorustungstovanadic acid, germanotungstovanadic acid, phosphorusmolybdotungstovanadic acid, germanomolybdotungstovanadic acid, phosphorusmolybdotungstic acid, phosphorusmolybdoniobic acid, and salts of these acids such as salts with, for example, any of metals of Group 1 or 2 of the periodic table specifically including lithium, sodium, potassium, rubidium, cesium, beryllium, magnesium, calcium, strontium, and barium, and organic salts such as triphenylethyl salt can be used, but are not limited thereto.

Among the ionized ionic compound (b-3), the aforementioned ionic compounds are preferable, and among these, triphenylcarbeniumtetrakis(pentafluorophenyl)borate and N,N-dimethylaniliniumtetrakis(pentafluorophenyl)borate are more preferable.

In the present invention, when a metallocene catalyst containing a bridged metallocene compound (a), an organometallic compound (b-1) such as triisobutylaluminum, an organoaluminum oxy compound (b-2) such as methylaluminoxane, and an ionized ionic compound (b-3) such as triphenylcarbeniumtetrakis(pentafluorophenyl)borate is used as the polymerization catalyst, a very high polymerization activity can be exhibited in producing the copolymer.

(c) Particulate carrier

The particulate carrier (c) used as necessary in the present invention is an inorganic compound or an organic compound, and is a granular or particulate solid.

As the inorganic compound, porous oxides, inorganic halides, clays, clay minerals, or ion-exchanging layered compounds are preferable. Specific examples thereof include those described in WO2015/122495.

The clays, clay minerals, and ion-exchanging layered compounds used in the present invention may be used as they are, or may be used after subjecting to a treatment such as ball milling or sieving. Moreover, they may be used after subjecting to water adsorption or dehydration under heating. Further, they may be used singly or in combination of two or more kinds thereof.

Among these, clays or clay minerals are preferable, and montmorillonite, vermiculite, hectorite, teniolite, and synthetic mica are particularly preferable.

Examples of the organic compounds include a granular or particulate solid having a particle size in the range of 10 to 300 um. Specific examples thereof include (co)polymers produced with an $\alpha$-olefin having 2 to 14 carbon atoms such as ethylene, propylene, 1-butene, and 4-methyl-1-pentene as the main component, (co)polymers produced with vinylcyclohexane or styrene as the main component, and modified products thereof.

The polymerization catalyst used in the present invention may contain in addition to the metallocene compound (a), at least one compound (b) selected from the organometallic compound (b-1), the organoaluminum oxy compound (b-2), and the ionized ionic compound (b-3), and the carrier (c) used as necessary, and further, if necessary, a certain organic compound component (d).

(d) Organic compound component

In the present invention, the organic compound component (d) is used to improve the polymerization performance and physical properties of the polymer produced if necessary. Examples of such an organic compound include, but are not limited to alcohols, phenol compounds, carboxylic acids, phosphorus compounds, and sulfonate salts.

«Method for producing copolymer and conditions»

The copolymer of the present invention is produced by copolymerizing ethylene, $\alpha$-olefin, and VNB.

Examples of the usage method and the order of addition of each component that constitutes the above-described polymerization catalyst in copolymerizing such monomers include, though they are arbitrarily selected, the following methods (1) to (5). (1) A method for adding a bridged metallocene compound (a) to a polymerizer singly. (2) A method for adding a bridged metallocene compound (a) and a compound (b) to a polymerizer in an arbitrary order. (3) A method for adding a catalyst component in which a bridged metallocene compound (a) is supported on a carrier (c), and a compound (b) to a polymerizer in an arbitrary order. (4) A method for adding a catalyst component in which a compound (b) is

supported on a carrier (c), and a bridged metallocene compound (a) to a polymerizer in an arbitrary order. (5) A method for adding a catalyst component in which a bridged metallocene compound (a) and a compound (b) are supported on a carrier (c) to a polymerizer.

In each of the methods (2) to (5), at least two of the bridged metallocene compound (a), the compound (b), and the carrier (c) may be put in contact preliminarily.

In each of the methods (4) and (5), in which a compound (b) is supported, another compound (b) which is not supported may be added in any order, as necessary. In this case, this compound (b) may be the same as or different from the compound (b) supported on the carrier (c).

A solid catalyst component having the bridged metallocene compound (a) supported on the carrier (c) or a solid catalyst component having the bridged metallocene compound (a) and the compound (b) supported on the carrier (c) may have an olefin polymerized preliminarily and may further have a catalyst component supported on the preliminarily polymerized solid catalyst component.

The copolymer of the present invention can be suitably obtained by copolymerizing ethylene, $\alpha$-olefin, and VNB in the presence of the polymerization catalyst as described above.

In polymerizing ethylene, $\alpha$-olefin, and VNB by using the polymerization catalyst as described above, the bridged metallocene compound (a) is usually used in an amount of $10^{-12}$ to $10^{-2}$ mol, and preferably $10^{-10}$ to $10^{-8}$ mol per liter of reaction volume.

The compound (b-1) is used in an amount such that the molar ratio [(b-1)/M] of the compound (b-1) to all transition metal atoms (M) in the bridged metallocene compound (a) is usually 0.01 to 50,000, and preferably 0.05 to 10,000. The compound (b-2) is used in an amount such that the molar ratio [(b-2)/M] of aluminum atoms in the compound (b-2) to all transition metals (M) in the bridged metallocene compound (a) is usually 10 to 50,000, and preferably 20 to 10,000. The compound (b-3) is used in an amount such that the molar ratio [(b-3)/M] of the compound (b-3) to all transition metals (M) in the bridged metallocene compound (a) is usually 1 to 20, preferably 1 to 15.

In the present invention, the copolymer can be produced by either of a liquid phase polymerization method such as solution (dissolution) polymerization and suspension polymerization, or a gas phase polymerization method, and the method preferably has a step of obtaining a polymerization reaction liquid described below, but is not particularly limited thereto.

The step of obtaining a polymerization reaction liquid is a step of copolymerizing ethylene, $\alpha$-olefin, and VNB by using an aliphatic hydrocarbon as the polymerization solvent in the presence of the above bridged metallocene compound (a) to obtain a polymerization reaction liquid of the copolymer.

Examples of the polymerization solvent include aliphatic hydrocarbons and aromatic hydrocarbons. Specific examples thereof include aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; and halogenated hydrocarbons such as ethylene chloride, chlorobenzene, and dichloromethane, and they may be used singly or in combination of two or more kinds thereof. An olefin itself can also be used as a solvent. Among these, hexane is preferable from the viewpoint of separation and purification of the copolymer to be obtained.

The polymerization temperature is usually -50 to +200°C, preferably in the range of 0 to +150°C, more preferably in the range of +70 to +110°C, and a higher temperature (+70°C or more) is desirable from the viewpoint of catalyst activity, copolymerization ability, and productivity, though it depends on the target molecular weight to be achieved by the metallocene catalyst system used and polymerization activity.

The polymerization pressure is usually under the condition of normal pressure to 10 MPa gauge pressure, preferably 1.1 to 5 MPa gauge pressure, more preferably 1.2 to 2.0 MPa gauge pressure, and the polymerization reaction can be carried out by any methods such as a batch type, a semi-continuous type, and a continuous type. Further, the polymerization can be carried out in two or more separated stages which differ in reaction conditions. In the present invention, among these, a method for carrying out copolymerization by feeding ethylene and a non-conjugated polyene continuously to a reactor is preferably adopted.

The reaction time (the average residence time when the copolymerization is performed by a continuous method) varies depending on the conditions such as catalyst concentration and polymerization temperature and is usually 0.5 minutes to 5 hours, preferably 5 minutes to 3 hours, more preferably 10 minutes to 2 hours.

The molecular weight of the copolymer to be obtained can be controlled by having hydrogen present in a polymerization system or by changing polymerization temperature. Further, it can be controlled by changing the amount of the compound (b) to be used. Specific examples thereof include triisobutylaluminum, methylaluminoxane, and diethyl zinc. When a hydrogen is added, its amount is appropriately about 0.001 to 100 NL per kg of olefin.

In the present invention, after (1) the step of carrying out the copolymerization in the presence of the polymerization catalyst, (2) a step of adding a catalyst deactivator to deactivate the polymerization catalyst is preferably carried out.

As the catalyst deactivator, alcohols can be used, and alcohols are preferably methanol or ethanol, particularly

preferably ethanol.

In the step (2), by adding the catalyst deactivator preferably in an amount of 0.05 to 3.0 mol times, more preferably 0.06 to 2.5 mol times, and further preferably 0.08 to 2.0 mol times with respect to the organometallic compound (b-1), a small amount of a catalyst modified due to the catalyst deactivator such as ethanol is produced and moderately polymerizes low molecular weight components, resulting in obtaining a copolymer having a moderately wide molecular weight distribution. On the other hand, when the amount of the catalyst deactivator added is too large, almost no modified catalyst is produced and almost no polymerization of low molecular weight components is carried out, so that the molecular weight distribution of the copolymer to be obtained tends to be narrow. When no catalyst deactivator is added or the amount thereof added is too small, a large amount of the modified catalyst is produced and a large amount of low molecular weight components is polymerized, so that the content of the low molecular weight components in the copolymer to be obtained tends to be too large.

<Application of ethylene/α-olefin/5-vinyl-2-norbornene copolymer>

When the copolymer of the present invention is applied to LIM molding or a wide variety of other molding methods, at least one selected from the group consisting of a crosslinking agent, a crosslinking aid, a vulcanizing aid, a filler, a softener, an antioxidant, a processing aid, an activator, a heat resistant stabilizer, a weathering stabilizer, an antistatic agent, a colorant, a lubricant, and a thickening agent can be contained. In addition, each additive may be used singly or in combination of two or more kinds thereof.

<Crosslinking agent, crosslinking aid, and vulcanizing aid>

Examples of the crosslinking agent include a crosslinking agent which is generally used to crosslink rubbers such as organic peroxides, phenol resins, hydrosilicone-based compounds, amino resins, quinones or derivatives thereof, amine-based compounds, azo-based compounds, epoxy-based compounds, and isocyanate-based compounds. Among these, organic peroxides are preferable.

Examples of the organic peroxide include dicumyl peroxide (DCP), di-tert-butylperoxide, 2,5-di-(tert-butylperoxy) hexane, 2,5-dimethyl-2,5-di-(tert-butylperoxy) hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy) valerate, benzoyl peroxide, p-chlorobenzoyl peroxide, 2,4-dichlorobenzoyl peroxide, tert-butylperoxybenzoate, tert-butylperoxyisopropylcarbonate, diacetyl peroxide, lauroyl peroxide, and tert-butyl cumyl peroxide.

When an organic peroxide is used as the crosslinking agent, the amount thereof blended is generally 0.1 to 20 parts by mass, preferably 0.2 to 15 parts by mass, and further preferably 0.5 to 10 parts by mass with respect to 100 parts by mass of the copolymer. The amount of the organic peroxide blended within the above range is suitable because the molded body to be obtained has no bloom on its surface, and the copolymer composition exhibits excellent crosslinking characteristics.

When an organic peroxide is used as the crosslinking agent, a crosslinking aid is preferably used in combination. Examples of the crosslinking aid include sulfur; quinone dioxime-based crosslinking aids such as p-quinonedioxime; acrylic crosslinking aids such as ethylene glycol dimethacrylate and trimethylolpropane trimethacrylate; allyl-based crosslinking aids such as diallyl phthalate and triallyl isocyanurate; maleimide-based crosslinking aids; divinylbenzene; and metal oxides such as zinc oxide (e.g., ZnO#1, two zinc oxides (JIS standard (K-1410)), manufactured by HAKUSUI TECH CO., LTD.), magnesium oxide, and active zinc oxide (e.g., zinc oxide such as "META-Z102" (trade name; manufactured by Inoue Calcium Corporation)).

When the crosslinking aid is used, the amount of the crosslinking aid blended in the copolymer composition is usually 0.5 to 10 mol, preferably 0.5 to 7 mol, more preferably 1 to 6 mol per 1 mol of the organic peroxide.

Examples of the vulcanizing aid include zinc oxide (e.g., ZnO#1, two zinc oxides, manufactured by HAKUSUI TECH CO., LTD.), magnesium oxide, and active zinc oxide (e.g., zinc oxide such as "META-Z102" (trade name; manufactured by Inoue Calcium Corporation)).

When the vulcanizing aid is used, the amount of the vulcanizing aid blended is usually 1 to 20 parts by mass with respect to 100 parts by mass of the copolymer.

<Filler>

The filler according to the present invention is a known rubber reinforcing agent to be blended in, for example, a rubber composition, and is usually an inorganic material referred to as carbon black or an inorganic reinforcing agent.

Specific examples of the filler according to the present invention include Asahi #55G and Asahi #60UG (the above are manufactured by ASAHI CARBON CO., LTD.), carbon blacks (manufactured by TOKAI CARBON CO., LTD.) of SEAST (such as V, SO, 116, 3, 6, 9, SP, and TA), those obtained by subjecting these carbon blacks to surface treatment by,

for example, a silane coupling agent, and silica, activated calcium carbonate, fine powder talc, fine powder silicic acid, light calcium carbonate, heavy calcium carbonate, talc, and clay.

These fillers may be used singly or as a mixture of two or more thereof.

As the filler according to the present invention, for example, carbon black, light calcium carbonate, heavy calcium carbonate, talc, or clay is preferably used.

When the filler is contained, the filler may be blended in the range of usually 50 to 300 parts by mass, and preferably 80 to 250 parts by mass with respect to 100 parts by mass of the copolymer.

<Softener>

Examples of the softener include petroleum-based softeners such as process oil, lubricating oil, paraffin oil, liquid paraffin, petroleum asphalt, and vaseline; coal tar-based softeners such as coal tar; aliphatic oil-based softeners such as castor oil, linseed oil, rapeseed oil, soybean oil, and coconut oil; waxes such as beeswax and carnauba wax; naphthenic acid, pine oil, rosin or derivatives thereof; synthetic polymer substances such as terpene resin, petroleum resin, and coumarone-indene resin; ester-based softeners such as dioctyl phthalate and dioctyl adipate; microcrystalline waxes, liquid polybutadiene, modified liquid polybutadiene, hydrocarbon-based synthetic lubricating oil, tall oil, and substitute (factices), and among these, petroleum-based softeners are preferable, and process oil is particularly preferable.

When the softener is contained, the amount of the softener blended is generally 2 to 100 parts by mass, and preferably 10 to 100 parts by mass with respect to 100 parts by mass of the ethylenic copolymer.

<Antioxidant (stabilizer)>

By blending an antioxidant (stabilizer) to the copolymer composition of the present invention, the lifetime of the seal packing to be formed can be prolonged. Examples of such an antioxidant include conventionally known antioxidants such as an amine-based antioxidant, a phenol-based antioxidant, a sulfur-based antioxidant.

Examples of the antioxidant include aromatic secondary amine-based antioxidants such as phenylbutylamine and N,N-di-2-naphthyl-p-phenylenediamine; phenolic antioxidants such as dibutylhydroxytoluene and tetrakis[methylene(3,5-di-t-butyl-4-hydroxy)hydrocinnamate]methane; thioether-based antioxidants such as bis[2-methyl-4-(3-n-alkylthiopropionyloxy)-5-t-butylphenyl]sulfide; dithiocarbamate antioxidants such as nickel dibutyldithiocarbamate; zinc salts such as 2-mercaptobenzoylimidazole, 2-mercaptobenzimidazole, and 2-mercaptobenzimidazole; and sulfur-based antioxidants such as dilauryl thiodipropionate and distearyl thiodipropionate.

When the antioxidant is contained, the amount of the antioxidant blended is typically 0.3 to 10 parts by mass, and preferably 0.5 to 7.0 parts by mass with respect to 100 parts by mass of the copolymer. When the amount of the antioxidant blended falls within the above range, the molded body to be obtained has no bloom on its surface, and further, the occurrence of the inhibition of vulcanization can be suppressed.

<Processing aid>

The processing aid generally blended into rubbers as a processing aid can be widely used. Specific examples thereof include ricinoleic acid, stearic acid, palmitic acid, lauric acid, barium stearate, zinc stearate, calcium stearate, zinc laurate, or esters. Among these, stearic acid is preferable.

When the processing aid is contained, the processing aid can be appropriately blended in an amount of usually 1 to 3 parts by mass with respect to 100 parts by mass of the copolymer. The amount of the processing aid falling within the range is preferable because processability such as kneading processability, extrusion processability, and injection moldability is excellent.

The processing aid may be one or two or more kinds.

<Activator>

Examples of the activator include amines such as di-n-butylamine, dicyclohexylamine, and monoethanolamine; activators such as diethylene glycol, polyethylene glycol, lecithin, triallyl trimellitate, and zinc compounds of aliphatic carboxylic acid or aromatic carboxylic acid; zinc peroxide preparations; and octadecyltrimethylammonium bromide, synthetic hydrotalcite, and special quaternary ammonium compounds.

When the activator is contained, the amount of the activator blended is typically 0.2 to 10 parts by mass, and preferably 0.3 to 5 parts by mass with respect to 100 parts by mass of the copolymer.

<Copolymer composition containing ethylene/α-olefin/5-vinyl-2-norbornene copolymer>

The copolymer composition containing the ethylene/α-olefin/5-vinyl-2-norbornene copolymer of the present invention (hereinafter, sometimes referred to as "the copolymer composition"), and above all, the copolymer composition containing the above crosslinking agent can be suitably used in applications such as sealants, coating materials, potting materials, and adhesives. As used herein, the sealant refers to a material for sealing (tight sealing). Thus, materials used for watertight and airtight sealing of a joint part or a contact part in various industries such as machine industry, electric industry, and chemical industry are also sealants in a broad sense. The sealant may be in paste form or have a definite shape. As for the sealant, reference can be made to p. 141 of "building sealant - basis and correct way to use -" (the first edition, Japan Sealant Industry Association, koubunsha Co., Ltd.), if necessary. Herein, particularly preferred examples of the sealant include a sealant which is filled in, for example, a gap and then cured, or a sealant which is applied between objects and then cured.

Specific applications will be described below.

The copolymer composition of the present invention is used in, for example, electric and electronic parts, transport machine, civil engineering and building, medical, and leisure applications.

Specific examples of the application of electric and electronic parts include sealants, potting materials, coating materials, or adhesive materials of circuits or substrates of heavy electric parts, light electric parts, and electric and electronic devices; repairing materials for wire coating; insulating seal materials for electric wire joint parts; rolls for OA devices; vibration absorbing agents; and encapsulants for gels or condensers.

The above sealants are suitably used as sealants for, for example, refrigerators, freezers, wash machines, gas meters, microwaves, steam irons, and electric leakage breakers.

The above potting materials are suitably used to pot, for example, transformer high voltage circuits, printed boards, high voltage transformers equipped with a variable resistor part, electric insulation parts, semiconductive parts, conductive parts, solar cells, or flyback transformers for television.

The above coating materials are suitably used to coat, for example, various circuit elements such as high voltage thick film resistors or hybrid ICs; HIC, electric insulation parts; semiconductive parts; conductive parts; modules; printing circuits; ceramic substrates; buffer materials such as diodes, transistors, or bonding wire; semiconductor elements; or optical fiber for optical communication.

The above adhesives are suitably used to adhere, for example, CRT wedges, necks, electric insulation parts, semiconductive parts, or conductive parts.

Examples of the above transport machine applications include automobile, ocean vessel, aircraft, and railroad vehicle applications.

Examples of automobile applications include gaskets for automobile engines, sealants for electrical components or oil filters; potting materials for igniter HIC or automobile hybrid IC; coating materials for automobile bodies, window glass for automobiles, or engine control substrates; and adhesives for gaskets of oil pans or timing belt covers, moldings, head lump lenses, sliding roof seals, and mirrors.

Examples of ocean vessel applications include sealants for wiring connection branch boxes, electrical system parts, or electric wire; and adhesives for electric wire or glass.

Examples of the above civil engineering and building applications include sealants for building materials used for butt joints in the glass screen method of commercial buildings, joints around glass between glass and sashes, interior joints in toilets, washrooms, or showcases, joints around bathtubs, exterior wall expansion joints for prefabricated houses, joints for siding boards; sealants for double layer glass; sealants for civil engineering used for repairing roads; paints and adhesives for metal, glass, stone materials, slate, concrete, or roof tiles; and adhesive sheets, waterproof sheets, or vibration isolation sheets.

Examples of the above medical applications include medical rubber stoppers, syringe gaskets, and rubber stoppers for decompressed blood vessels.

Examples of the above leisure applications include swimming members such as swimming caps, diving masks, and earplugs; and gel buffer members of sports shoes and baseball gloves.

The copolymer composition of the present invention can be suitably used as sealants (seal materials), potting materials, coating materials, or adhesives in, for example, electric and electronic parts, transport machine, civil engineering and building, and leisure applications.

Examples

Hereinafter the present invention will be described in detail with reference to Examples, but the present invention is not limited to these Examples.

The copolymers used in Examples and Comparative Examples were produced by the following production method.

[Methylphenylmethylene($\eta^5$-cyclopentadienyl)($\eta^5$-2,7-di-t-butylfluorenyl)]zirconium dichloride that is a metallocene-based catalyst used in the polymerization example in Examples was synthesized by the method described in WO2015/147215.

The symbol such as (a) to (t) shown in Examples 1 to 4 represents the amount of each unit shown in the following Table 1.

[Examples 1 to 4]

Dehydrated and purified n-hexane was supplied at a rate of (a) liter/h to a supply port of a continuous polymerizer with a capacity of 136 liters, and (b) mmol/liter) of a hexane solution of [methylphenylmethylene($\eta^5$-cyclopentadienyl)($\eta^5$-2,7-di-t-butylfluorenyl)]zirconiumdichloride (ZD), a hexane solution (5 mmol/liter) of triisobutylaluminum, (e) mmol-B/liter) of a hexane slurry of N,N-dimethylaniliniumtetrakis(pentafluorophenyl)borate, and 5-vinyl-2-norbornene (VNB) were continuously supplied from another supply port at a rate of (c) liter/h, (d) liter/h, (f) liter/h, and (g) g/h, respectively (total hexane (h) liter/hr). Simultaneously, ethylene, 1-butene, and hydrogen were continuously supplied at a rate of (i) kg/h, (j) kg/h, and (k) NL/h from a further supply port of the polymerizer, and continuous solution polymerization was carried out under the conditions of a polymerization temperature of (l) °C, a total pressure of (m) MPaG, and a residence time of (n) minutes.

The hexane solution of the ethylene/1-butene/VNB copolymer produced in the polymerizer was continuously discharged through a discharge port provided on a side wall part of the polymerizer, and let into a connecting pipe in which a jacket part was heated with steam at 8 kg/$cm^2$. The hexane solution of the ethylene/1-butene/VNB copolymer heated to about 170°C in the connecting pipe equipped with a steam jacket was continuously fed to a flash tank through the inner pipe of a double pipe heated with steam at 10 kg/$cm^2$ by controlling the opening of a solution level control valve provided on the terminal part of the connecting pipe to maintain the amount of the solution in the polymerization tank to about 28 liters. A supply port for injecting methanol as a catalyst deactivator was attached on immediately downstream of the solution level control valve, and the methanol was injected as a 1.0 vol% diluted hexane solution at a rate of 12 liter/h and was made to join with the hexane solution. In the transfer into the flash tank, the solution temperature and the opening of the pressure control valve were set so that the pressure in the flash tank of 0.05 MPaG and the temperature of the steam part in the flash tank of 180°C were maintained.

As a result, an ethylene/1-butene/VNB copolymer was obtained at a production speed of (p) kg/h. The polymerization mileage of the ethylene-diene copolymer was (q) kg/mmol-Zr, the intrinsic viscosity [η] of the ethylene/1-butene/VNB copolymer was (r) dl/g, the ethylene content was (s)% by mass, and the VNB content was (t)% by mass.

[Table 1]

| | | Example 1 | Example 2 | Example 3 | Example 4 |
|---|---|---|---|---|---|
| | | Copolymer 1 | Copolymer 2 | Copolymer 3 | Copolymer 4 |
| a (C6) | L/h | 23 | 23 | 23 | 23 |
| b (ZD) | mmol/L | 1.4 | 1.4 | 1.4 | 1.4 |
| c (ZD) | L/h | 0.019 | 0.021 | 0.071 | 0.071 |
| d (TiBA) | L/h | 0.40 | 0.40 | 0.40 | 0.40 |
| e (CB-4) | mmol-B/L | 0.3 | 0.3 | 0.3 | 0.3 |
| f (CB-4) | L/h | 0.36 | 0.40 | 1.33 | 1.33 |
| g (VNB) | g/h | 260 | 260 | 260 | 400 |
| h (T-C6) | L/h | 25 | 25 | 25 | 25 |
| i (C2") | Kq/h | 4.2 | 4.2 | 4.2 | 4.2 |
| j (C4") | kg/h | 2.8 | 2.8 | 3.7 | 3.2 |
| k (H2) | N L/h | 1800 | 1300 | 1500 | 1100 |
| l (Polymerization temperature) | °C | 115 | 115 | 115 | 115 |
| m (Polymerization pressure) | MPaG | 3.3 | 3.3 | 3.3 | 3.3 |
| n (H.T.) | min | 49 | 49 | 49 | 49 |
| p (Load) | kg/h | 3.3 | 3.0 | 3.6 | 4.9 |

(continued)

| | | Example 1 | Example 2 | Example 3 | Example 4 |
|---|---|---|---|---|---|
| | | Copolymer 1 | Copolymer 2 | Copolymer 3 | Copolymer 4 |
| q (Mileage) | kq/mmol-Zr | 123 | 109 | 73 | 49 |
| r ([η]) | dl/g | 0.15 | 0.19 | 0.17 | 0. 08 |
| s (C2") | % by mass | 76.3 | 76.5 | 71.7 | 59.6 |
| t (VNB) | % by mass | 2.0 | 2.0 | 3.4 | 4.1 |
| | | | | | |
| Mw | | 6280 | 6980 | 6210 | 2750 |
| Mn | | 2650 | 2970 | 2470 | 1140 |
| Mw/M n | | 2.37 | 2.35 | 2.52 | 2.41 |
| Tαβ/Tαα | | 0 | 0 | 0 | 0 |
| Endo/exo ratio | | 1.9 | 2.0 | 2.1 | 2.2 |
| B value | | | | | 1.19 |

[Comparative Examples 1 and 2]

The ethylene/propylene/5-vinyl-2-norbornene copolymers shown in Comparative Example 1 and Comparative Example 2 were produced by the following production method.

[Production Example 1]

Using a polymerizer made of stainless with a substantial internal capacity of 100 L equipped with a stirring vane (stirring rotation speed = 250 rpm), ternary copolymerization of ethylene, propylene, and 5-vinyl-2-norbornene was continuously carried out. Hexane, ethylene, propylene, 5-vinyl-norbornene, hydrogen, the catalyst $VO(OEt)Cl_2$, and $Al(Et)_{1.5}Cl_{10.5}$ were continuously supplied from the side part of the polymerizer to the liquid phase at a rate of 45.5 L/h, 1.4 kg/h, 6.8 kg/h, 70 g/h, 500 NL/h, 16 mmol/h, and 112 mmol/h, respectively.

By carrying out the copolymerization reaction under the above conditions, an ethylene/propylene/5-vinyl-norbornene copolymer (A-1) as a random copolymer was obtained in a uniform solution state.

Thereafter, a small amount of methanol was added into the polymerization solution continuously extracted from the lower part of the polymerizer to stop the polymerization reaction, and the copolymer was separated from the solvent by a steam stripping treatment, followed by carrying out vacuum drying at 55°C for 48 hours.

The physical properties of the obtained ethylene/propylene/5-vinyl-norbornene copolymer (A-1) are shown in Table 2.

[Production Example 2]

Using a polymerizer made of stainless with a substantial internal capacity of 100 L equipped with a stirring vane (stirring rotation speed = 250 rpm), copolymerization of ethylene, propylene, and 5-vinyl-2-norbornene was continuously carried out. Hexane, ethylene, propylene, 5-vinyl-norbornene, hydrogen, the catalyst $VO(OEt)Cl_2$, and $Al(Et)_{1.5}Cl_{1.5}$ were continuously supplied from the side part of the polymerizer to the liquid phase at a rate of 45.5 L/h, 1.4 kg/h, 6.8 kg/h, 400 g/h, 1000 NL/h, 16 mmol/h, and 112 mmol/h, respectively.

By carrying out the copolymerization reaction under the above conditions, an ethylene/propylene/5-vinyl-norbornene copolymer (A-2) was obtained in a uniform solution state.

Thereafter, a small amount of methanol was added into the polymerization solution continuously extracted from the lower part of the polymerizer to stop the polymerization reaction and the copolymer was separated from the solvent by a steam stripping treatment, followed by carrying out vacuum drying at 55°C for 48 hours.

The physical properties of the obtained ethylene/propylene/5-vinyl-norbornene copolymer (A-2) are shown in Table 2.

[Table 2]

Table 2

| | | Comparative Example 1 | Comparative Example 2 |
|---|---|---|---|
| Copolymer | | (A-1) | (A-2) |
| r ([η]) | dl/g | 0.18 | 0.08 |
| s (C2") | % by mass | 50.0 | 50.0 |
| t (VNB) | % by mass | 2.0 | 11.0 |
| Mw | | 6510 | 2810 |
| Mn | | 1950 | 950 |
| Mw/M n | | 3.34 | 2.95 |
| Tαβ/Tαα | | 1.5 | 1.2 |
| Endo/exo ratio | | 2.9 | 3.4 |

[Comparative Examples 3 and 4, and Example 5]

Using the ethylene/propylene/5-vinyl-norbornene copolymer (A-1) and the ethylene/propylene/5-vinyl-norbornene copolymer (A-2) obtained in the above Production Example 1 and Production Example 2, and the copolymer 2 obtained in Example 2, as the first stage, "META-Z102" (trade name; manufactured by Inoue Calcium Corporation) as zinc oxide, dicumyl peroxide (manufactured by Kayaku Akzo Corporation, trade name: Mitsui DCP-40C) as organic peroxide, and triallyl isocyanurate (trade name: TAIC, manufactured by Shinryo Corporation) as a crosslinking aid, each shown in Table 3, were blended in an amount shown in Table 3 with respect to 100 parts by mass of the copolymer by using a THINKY MIXER (AR-250, manufactured by THINKY CORPORATION, rotation and revolution type mixing without propeller), and kneaded at room temperature for 10 minutes. Then, as the second stage, the blend obtained in the first stage was wound on a three-roll mill (BR-230BV, manufactured by AIMEX Co., Ltd., roll dimension φ86.5 × 230 mmL) and kneaded at room temperature for 10 minutes to obtain the uncrosslinked composition of each example.

With respect to the obtained uncrosslinked composition, the following values were determined according to JIS K6300-2 based on the crosslinking curve measured from the crosslinking temperature and the crosslinking time shown in each Table. In the measurement, RPA2000P (manufactured by Alpha Technologies) was used.

"$S'_{max}$" (dNm) : the maximum torque value $S'_{max}$.
"$S'_{min}$" (dNm): the minimum torque value $S'_{min}$.
"$tcx_1$" (min): the time required for reaching the torque value corresponding to the sum of the torque value corresponding to $x_1$% of "$S'_{max}$-$S'_{min}$" and the minimum torque value $S'_{min}$ from the minimum torque value $S'_{min}$. For example, "tc10" is the time required for reaching the torque value corresponding to the sum of the torque value corresponding to 10% of "$S'_{max}$-$S'_{min}$" and the minimum torque value $S'_{min}$ from the minimum torque value $S'_{min}$.
"Peak Rate" (dNm/min): the maximum change rate of torque in the crosslinking curve.

Then, the uncrosslinked composition of each example was pressed in a mold with a press molding machine at 170°C for 20 minutes to obtain a sheet-shaped crosslinked molded body having a thickness of 2 mm.

The tensile test was carried out on the obtained crosslinked sheet according to the following method.

According to tensile test: JIS K-6251, tensile test was carried out under the conditions of a measurement temperature of 23°C, at a tensile rate of 500 mm/minute to measure tensile strength at break TB and elongation at break EB of the crosslinked sheet.

The results are shown in Table 3.

[Table 3]

Table 3

| | | Comparative Example 3 | Comparative Example 4 | Example 5 |
|---|---|---|---|---|
| Copolymer | | A-1 | A-2 | Copolymer 2 |
| [η] | dl/g | 0.18 | 0.08 | 0.19 |
| C2" Content | % by mass | 50.0 | 50.0 | 76.5 |
| VNB Content | % by mass | 2.0 | 11.0 | 2.0 |
| <Blend> | | | | |
| Copolymer | | 100 | 100 | 100 |
| Zinc oxide | | 3 | 3 | 3 |
| Dicumyl peroxide | | 6 | 6 | 6 |
| Crosslinking aid | | 1 | 1 | 1 |
| Total | | 110 | 110 | 110 |
| <Uncrosslinked rubber physical properties> 170°C×20 min | | | | |
| tc10 | min | 3.6 | 0.2 | 2.9 |
| tc90 | min | 13.4 | 15.1 | 12.8 |
| S'Max | dNm | 1.6 | 0.5 | 3.2 |
| Peak Rate | dNm/min | 0.4 | 0.7 | 0.6 |
| Crosslinked composition physical properties | | | | |
| Hardness (HA) | | 30 | 70 | 80 |
| TB | MPa | 0.4 | 0.8 | 3.5 |
| EB | % | 150 | 30 | 65 |

## Claims

1. An ethylene/α-olefin/5-vinyl-2-norbornene copolymer satisfying the following requirements (i) to (vi):

    (i) a weight average molecular weight is in a range of 1,000 to 50,000;
    (ii) a molecular weight distribution (Mw/Mn, Mw: weight average molecular weight, Mn: number average molecular weight) measured by gel permeation chromatography (GPC) is 2.7 or less;
    (iii) an intensity ratio Tαβ/Tαα in a $^{13}$C-NMR spectrum is 0.0 to 0.1;
    (iv) a content of a constitutional unit derived from 5-vinyl-2-norbornene is in a range of 0.1 to 20.0% by mass;
    (v) the constitutional unit derived from 5-vinyl-2-norbornene contains an endo form structure and an exo form structure, and a ratio of endo form structure/exo form structure is 2.5 or less; and
    (vi) an intrinsic viscosity [η] measured in decahydronaphthalene at 135°C is in a range of 0.01 to 0.8 dl/g.

2. The copolymer according to claim 1, wherein a B value represented by the following formula (i) is 1.10 or more,

$$B\ value = ([EX]+2[Y])/[2\times[E]\times([X]+[Y])] \quad \dots \quad (i)$$

    wherein [E], [X], and [Y] respectively represent mole fractions of ethylene, α-olefin, and 5-vinyl-2-norbornene, and [EX] represents a dyad chain fraction of ethylene-α-olefin.

3. A copolymer composition comprising the ethylene/α-olefin/5-vinyl-2-norbornene copolymer according to claim 1.

**4.** A crosslinked body obtained by crosslinking the copolymer composition according to any one of claims 1 to 3.

**5.** A method for producing an ethylene/$\alpha$-olefin/5-vinyl-2-norbornene copolymer, comprising a step of copolymerizing ethylene, $\alpha$-olefin, and 5-vinyl-2-norbornene in the presence of an olefin polymerization catalyst comprising:

(a) a bridged metallocene compound represented by the following general formula [I], and
(b) at least one compound (b) selected from the group consisting of an organometal compound (b-1), an organoaluminum oxy compound (b-2), and a compound (b-3) that reacts with the bridged metallocene compound (a) to form an ion pair,

wherein the copolymer satisfies the following requirements (i) to (vi):

(i) a weight average molecular weight is in a range of 1,000 to 50,000;
(ii) a molecular weight distribution (Mw/Mn, Mw: weight average molecular weight, Mn: number average molecular weight) measured by gel permeation chromatography (GPC) is 2.7 or less;
(iii) an intensity ratio $T\alpha\beta/T\alpha\alpha$ in a $^{13}$C-NMR spectrum is 0.0 to 0.1;
(iv) a content of a constitutional unit derived from 5-vinyl-2-norbornene is in a range of 0.1 to 20.0% by mass;
(v) the constitutional unit derived from 5-vinyl-2-norbornene contains an endo form structure and an exo form structure, and
a ratio of endo form structure/exo form structure is 2.5 or less; and
(vi) an intrinsic viscosity [$\eta$] measured in decahydronaphthalene at 135°C is in a range of 0.01 to 0.8 dl/g,

[Chem. 1]

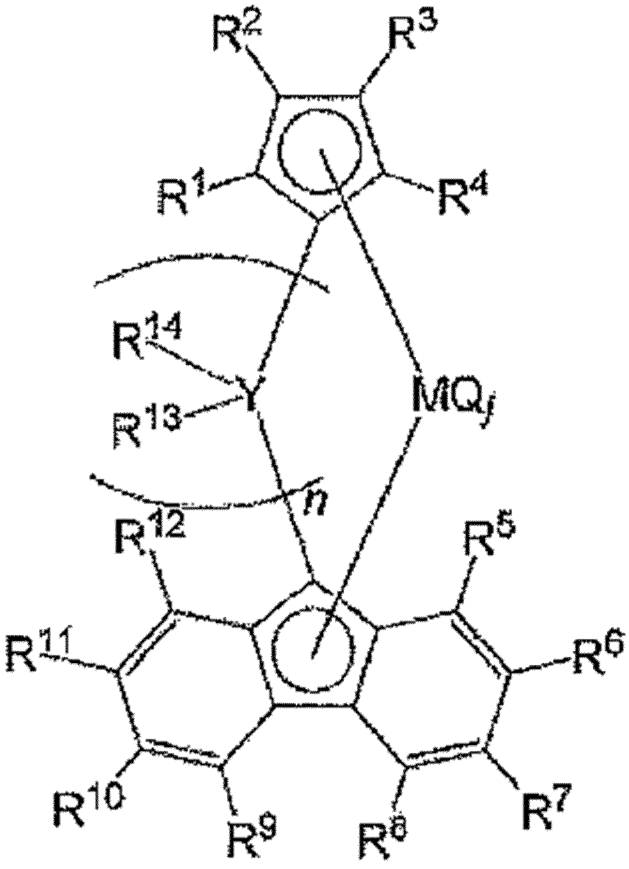

... [I]

wherein $R^1$, $R^2$, $R^3$, $R^4$, $R^5$, $R^6$, $R^7$, $R^8$, $R^9$, $R^{10}$, $R^{11}$, and $R^{12}$ are each an atom or a substituent selected from the group consisting of a hydrogen atom, a hydrocarbon group having 1 to 20 carbon atoms, a silicon-containing group, a nitrogen-containing group, an oxygen-containing group, a halogen atom, and a halogen-containing group, and $R^1$, $R^2$, $R^3$, $R^4$, $R^5$, $R^6$, $R^7$, $R^8$, $R^9$, $R^{10}$, $R^{11}$, and $R^{12}$ are the same as or different from

each other,
either one of $R^{13}$ and $R^{14}$ is an aryl group or a substituted aryl group, and the other is an atom or a substituent selected from the group consisting of a hydrogen atom, a hydrocarbon group having 1 to 20 carbon atoms, a silicon-containing group, a nitrogen-containing group, an oxygen-containing group, a halogen atom, and a halogen-containing group,
adjacent substituents among $R^1$ to $R^{14}$ are optionally bonded to each other to form a ring,
Y is selected from atoms of Group 14, and M is a titanium atom, a zirconium atom, or a hafnium atom, and Q is selected as a combination of the same or different members from a halogen atom, a hydrocarbon group having 1 to 20 carbon atoms, an anion ligand, and a neutral ligand capable of coordinating to a lone electron pair, n is an integer of 1 to 4, and j is an integer of 1 to 4.

**6.** The method for producing an ethylene/α-olefin/5-vinyl-2-norbornene copolymer according to claim 5, wherein the other of $R^{13}$ and $R^{14}$ is an alkyl group having 1 to 20 carbon atoms.

**INTERNATIONAL SEARCH REPORT**

International application No.
**PCT/JP2023/011699**

**A. CLASSIFICATION OF SUBJECT MATTER**

***C08F 210/18***(2006.01)i; ***C08F 4/6592***(2006.01)i; ***C08L 23/08***(2006.01)i; ***C08L 23/16***(2006.01)i
FI: C08F210/18; C08F4/6592; C08L23/08; C08L23/16

According to International Patent Classification (IPC) or to both national classification and IPC

**B. FIELDS SEARCHED**

Minimum documentation searched (classification system followed by classification symbols)

C08F210/18; C08F4/6592; C08L23/08; C08L23/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 62-121711 A (MITSUI PETROCHEM IND LTD) 03 June 1987 (1987-06-03) claims, pp. 7-10, examples | 1-6 |
| Y | JP 7-196717 A (MITSUI PETROCHEM IND LTD) 01 August 1995 (1995-08-01) claims, paragraphs [0050]-[0052], [0072]-[0083], [0088], examples | 1-6 |
| Y | JP 2019-167403 A (MITSUI CHEMICALS INC) 03 October 2019 (2019-10-03) claims, paragraphs [0008]-[0011], examples | 1-6 |
| Y | JP 2011-1497 A (MITSUI CHEMICALS INC) 06 January 2011 (2011-01-06) claims | 5-6 |
| A | WO 2015/122415 A1 (MITSUI CHEMICALS INC) 20 August 2015 (2015-08-20) entire text | 1-6 |
| A | JP 2006-299065 A (MITSUI CHEMICALS INC) 02 November 2006 (2006-11-02) entire text | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 April 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/011699**

| Patent document cited in search report | Publication date (day/month/year) | Patent family member(s) | Publication date (day/month/year) |
|---|---|---|---|
| JP 62-121711 A | 03 June 1987 | (Family: none) | |
| JP 7-196717 A | 01 August 1995 | (Family: none) | |
| JP 2019-167403 A | 03 October 2019 | (Family: none) | |
| JP 2011-1497 A | 06 January 2011 | (Family: none) | |
| WO 2015/122415 A1 | 20 August 2015 | US 2016/0347894 A1<br>whole document<br>EP 3106480 A1<br>KR 10-2016-0103042 A<br>CN 105980420 A<br>BR 112016016900 A<br>TW 201536817 A | |
| JP 2006-299065 A | 02 November 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 43433870 B
- JP 3908001 B
- JP 3901599 B
- JP 2078687 A
- JP 1501950 W
- JP 1502036 W
- JP 3179005 A
- JP 3179006 A
- JP 3207703 A
- JP 3207704 A
- US 5321106 A
- WO 2015122495 A
- WO 2015147215 A


### Non-patent literature cited in the description


- **LINDEMANN ADAMS**. *Analysis Chemistry*, 1971, vol. 43, 1245
- **J.C.RANDALL**. *Review Macromolecular Chemistry Physics*, 1989, vol. C29, 201
- building sealant - basis and correct way to use. Japan Sealant Industry Association, koubunsha Co., Ltd., 141